# EUROPÄISCHE PATENTSCHRIFT

(11) **EP 3 134 198 B1**
(45) Veröffentlichungstag und Bekanntmachung des Hinweises auf die Patenterteilung: **25.04.2018**
(21) Anmeldenummer: 15741822.9
(22) Anmeldetag: 25.03.2015
(51) Int. Cl.: B01D 53/14, B01D 53/50, B01D 9/00

(54) **AUFBEREITUNGSEINHEIT FÜR EIN MIT SCHWEFELOXIDEN UND/ODER STICKOXIDEN VERUNREINIGTES WASCHMEDIUM**
PROCESSING UNIT FOR A WASHING MEDIUM CONTAMINATED WITH SULPHUR OXIDES AND/OR NITROGEN OXIDES
UNITÉ DE TRAITEMENT D'UN AGENT DE LAVAGE LIQUIDE POLLUÉ PAR DES OXYDES DE SOUFRE ET/OU DES OXYDES D'AZOTE

(30) Priorität: 25.04.2014 DE 102014207848
(43) Veröffentlichungstag der Anmeldung: 01.03.2017
(73) Patentinhaber: Siemens Aktiengesellschaft, 80333 München (DE)
(72) Erfinder: KURSAWE, Ansgar, 65527 Niedernhausen (DE); HAUKE, Stefan, 64683 Einhausen (DE); JOH, Ralph, 63500 Seligenstadt (DE); KINZL, Markus, 63128 Dietzenbach (DE); SCHNEIDER, Rüdiger, 65817 Eppstein (DE)
(86) Internationale Anmeldenummer: PCT/EP2015/056359
(87) Internationale Veröffentlichungsnummer: WO 2015/161977

(56) Entgegenhaltungen:
- EP-A1- 2 653 209
- WO-A2-2012/062724
- US-A- 3 208 834
- US-A- 4 389 383

## Beschreibung

Die Erfindung betrifft eine Aufbereitungseinheit für ein mit Schwefeloxiden und/oder Stickoxiden verunreinigtes Waschmedium nach Anspruch 1. Des Weiteren betrifft die Erfindung eine Abscheidevorrichtung mit einer entsprechenden Aufbereitungseinheit, sowie ein Verfahren zur Aufbereitung eines mit Schwefeloxiden und/oder Stickoxiden verunreinigten Waschmediums nach Anspruch 13. Vor dem Hintergrund der klimatischen Veränderungen ist es ein globales Ziel, die Emission von Schadstoffen in die Atmosphäre zu verringern. Dies gilt insbesondere für die Emission von Kohlendioxid (CO₂), welches sich in der Atmosphäre ansammelt, die Wärmeabstrahlung der Erde behindert und so als Treibhauseffekt zu einer Erhöhung der Erdoberflächentemperatur führt.

Besonders bei fossilbefeuerten Kraftwerksanlagen zur Erzeugung elektrischer Energie oder Wärme entsteht durch die Verbrennung eines fossilen Brennstoffes ein kohlendioxidhaltiges Rauchgas. Zur Vermeidung bzw. zur Verringerung von Kohlendioxid-Emissionen in die Atmosphäre muss das Kohlendioxid aus dem Rauchgas abgetrennt werden. Entsprechend werden insbesondere bei bestehenden fossilbefeuerten Kraftwerken geeignete Maßnahmen diskutiert, um nach der Verbrennung das entstandene Kohlendioxid aus dem Rauchgas abzutrennen (Post-Combustion-Capture). Als eine technische Realisierung wird hierzu das im Rauchgas enthaltene Kohlendioxid durch einen Absorptions-Desorptions-Prozess mittels eines Waschmediums bzw. eines Absorptionsmediums aus dem jeweiligen Rauchgasstrom herausgewaschen.

Zusätzlich zu Kohlendioxid werden in solchen insbesondere aminhaltigen und alkalischen Waschmedien auch andere saure Gase, insbesondere Stickoxide (NOₓ) und/oder Schwefeloxide (SOₓ), absorbiert. Anders als Kohlendioxid bildet beispielsweise SOₓ mit einem alkalischen Waschmedium unter Anderem temperaturbeständige Salze, wie beispielsweise Sulfat. So fällt beim Einsatz eines kaliumhaltigen Waschmediums SOₓ gemeinsam mit Kalium als Kaliumsulfat (K₂SO₄) aus, das in einer Desorptionseinheit nicht mehr zurückgebildet werden kann. Durch die hierdurch bedingte Veränderung der Alkalikonzentration senken diese temperaturbeständigen Salze sukzessive die Kapazität des Waschmediums zur Aufnahme von Kohlendioxid. NOₓ wird vom Waschmedium absorbiert, disproportioniert in der Lösung und bildet dort Nitrosamine, sowie sonstige lösliche Zerfallsprodukte.

Um diese Verunreinigungen zu entfernen, ist eine zweistufige Aufbereitung des Waschmediums üblich. Hierzu wird ein sogenannter Reclaimer ("Aufbereiter") mit einer SOₓ-Reclaimingstufe zur Entfernung von SOₓ bzw. Sulfaten, sowie mit einer NOₓ-Reclaimingstufe zur Entfernung von NOₓ, Nitrit, Nitrat und entsprechenden Folgeprodukten eingesetzt.

In der SOₓ-Reclaimingstufe, also dem SOₓ-Reclaimer, wird beispielsweise Kaliumsulfat in kristalliner Form abgeschieden, im Großmaßstab bevorzugt durch eine Kühlungskristallisation. Die löslichen Bestandteile werden in den Abscheideprozess für Kohlendioxid zurückgeführt und das abgetrennte Kaliumsulfat einer weiteren Verwendung, beispielsweise als Düngemittel-Zuschlagsstoff oder als Einsatzstoff für die Spezialchemikalienproduktion, zugeführt. Die NOₓ-Reclaimingstufe, also der NOₓ-Reclaimer, dient der Rückgewinnung der Aktivkomponente des Waschmediums, also beispielsweise eines Aminosäuresalzes. Hierzu wird das Waschmedium in einer Verdampfungsstufe eingedickt und von dort aus in einen Kristallisator des NOₓ-Reclaimers gepumpt. Hier wird das Aminosäuresalz als Feststoff auskristallisiert. Lösliche Nebenbestandteile werden als Abfallstoffe abgetrennt und einer entsprechenden Entsorgung zugeführt.

Bekannte Aufbereitungseinheiten sind beispielsweise in US3208834 A, WO2012/062724 A2, EP2653209 A1 und US4389383 A beschrieben. Allerdings ist nicht bei jedem Kraftwerkstyp der Einsatz des SOₓ-Reclaimers und des NOₓ-Reclaimers gleichermaßen wirtschaftlich. Da sich die von Kraftwerken emittierten Rauchgase insbesondere in Abhängigkeit des eingesetzten Brennstoffs stark in ihrer Zusammensetzung unterscheiden, sind je nach Kraftwerkstyp unterschiedliche Reclaimingstufen "dominant". Bei Kohlekraftwerken sind auch nach einer Entschwefelung des Rauchgases typischerweise noch sehr hohe Schwefelmengen im Waschmedium vorhanden, so dass beispielsweise Kaliumsulfat in kristalliner Form abgeschieden und anschließend verkauft werden kann. Entsprechend ist der Einsatz eines insbesondere auf einer Kühlungskristallisation basierenden SOₓ-Reclaimers in einem Kohlekraftwerk wirtschaftlich.

Bei Gaskraftwerken stellt sich die Situation anders dar: Die eingetragenen Schwefelmengen sind deutlich geringer als bei Kohlekraftwerken, so dass die Erlöse aus dem Verkauf von auskristallisiertem Kaliumsulfat im Vergleich zu den Betriebskosten eines SOₓ-Reclaimers vernachlässigbar sind. Mit anderen Worten ist der Einsatz eines SOₓ-Reclaimers bei Gaskraftwerksanwendungen nicht wirtschaftlich.

Es ist demnach eine erste Aufgabe der Erfindung, eine unter wirtschaftlichen Gesichtspunkten gegenüber dem Stand der Technik verbesserte Aufbereitungseinheit anzugeben, mittels welcher ein Waschmedium effektiv von enthaltenen Verunreinigungen befreit werden kann.

Eine zweite Aufgabe der Erfindung ist es, eine Abscheidevorrichtung für Kohlendioxid mit einer entsprechend verbesserten Aufbereitungseinheit anzugeben.

Eine dritte Aufgabe der Erfindung ist es, ein Verfahren anzugeben, welches unter Ausnutzung der Verbesserungen wirtschaftlich durchführbar ist.

Die erste Aufgabe der Erfindung wird erfindungsgemäß gelöst durch eine Aufbereitungseinheit, umfassend eine Verdampfungsstufe zur Aufkonzentrierung der Aktivkomponente des Waschmediums mit einem Verdampfer und/oder mit einem Wärmetauscher, sowie mit einem dem Verdampfer und/oder dem Wärmetauscher angeschlossenen Auffangbehälter, dadurch gekennzeichnet, dass der Auffangbehälter als ein Kristallisator zur Entfernung von Schwefeloxiden aus dem Waschmedium durch Kristallisation eines Sulfats, insbesondere von Kaliumsulfat, ausgebildet ist.

In einem ersten Schritt geht die Erfindung von der vorbeschriebenen Tatsache aus, dass der Einsatz eines auf einer Kühlungskristallisation basierenden SOₓ-Reclaimers bei Gaskraftwerksanwendungen zur Aufbereitung von Waschmedium unwirtschaftlich ist. Die über das Rauchgas eingetragenen Schwefelmengen sind so gering, dass die Erlöse aus dem Verkauf des Kaliumsulfats im Vergleich zu den Betriebskosten eines SOₓ-Reclaimers vernachlässigbar sind.

In einem zweiten Schritt berücksichtigt die Erfindung, dass es auch bei geringen Mengen an Schwefeloxiden im Waschmedium, notwendig ist, diese sicher zu entfernen. Durch das aus den Schwefeloxiden gebildete Sulfat, und insbesondere durch Kaliumsulfat besteht die Gefahr, dass es im Verdampfer des NOₓ-Reclaimers zu einer unkontrollierten Kristallisation und zu entsprechenden prozessschädigenden Verkrustungen kommt.

Im Verdampfer des NOₓ-Reclaimers, in dem das zugeführte Waschmedium auf das für die Kristallisation des Aminosäuresalzes notwendige Niveau aufkonzentriert wird, nimmt die Löslichkeit des Sulfats, insbesondere des Kaliumsulfats, aufgrund der zur Verdampfung benötigten erhöhten Temperatur zwar grundsätzlich zu. Allerdings sinkt innerhalb des Verdampfers die Löslichkeit insbesondere des Kaliumsulfats überproportional mit abnehmendem Wasseranteil, also mit zunehmender Aminosäuresalz-Konzentration. Eine unerwünschte Kristallisation von Sulfat kann so nicht ausgeschlossen werden.

Somit ist es zur Vermeidung einer unerwünschten Aufkonzentrierung von Sulfat im Waschmedium über die Betriebsdauer des Aufbereitungsprozesses unbedingt notwendig, die Abreicherung von Schwefel aus dem Waschmedium sicherzustellen. Der SOₓ-Reclaimingprozess ist somit auch bei Gaskraftwerksanwendungen grundsätzlich nicht verzichtbar.

Unter Berücksichtigung dieser Problematik erkennt die Erfindung in einem dritten Schritt, dass es möglich ist, die gewünschte Aufbereitung bzw. Regenerierung eines Waschmediums auf kostengünstige und einfache Weise umzusetzen, wenn eine Aufbereitungseinheit eingesetzt wird, bei der ein gängiger NOₓ-Reclaimer derart modifiziert wird, dass dieser neben der Abtrennung der Aktivkomponente aus dem Waschmedium ebenfalls die notwendige Abreicherung von Schwefel ermöglicht.

Hierzu ist dem Verdampfer und/oder dem Wärmetauscher der Verdampfungsstufe ein Auffangbehälter angeschlossen, welcher als ein Kristallisator zur Entfernung von Schwefeloxiden aus dem Waschmedium durch Kristallisation eines Sulfats, und insbesondere durch Kristallisation von Kaliumsulfat, ausgebildet ist. Somit wird ein in dem NOₓ-Reclaimingprozess als Teil einer Verdampfungsstufe eingesetzter Auffangbehälter derart modifiziert, dass er die zur Entfernung von Sulfat, und insbesondere zur Entfernung von Kaliumsulfat gewünschte Funktion erfüllt.

Die Aufbereitungseinheit kombiniert auf diese Weise die Funktionen eines gängigen SOₓ-Reclaimers und eines gängigen NOₓ-Reclaimers derart, dass sie sich insbesondere für Gaskraftwerksanwendungen mit geringen Schwefelfrachten eignet. Eine für die Abreicherung des Schwefels aus dem Hauptprozess mindestens notwendige Funktion eines klassischen SOₓ-Reclaimers, nämlich die kontrollierte Kristallisation von im Waschmedium enthaltenen Schwefeloxiden beispielsweise in Form von Kaliumsulfat, wird in die deutlich weniger komplexe und kostengünstigere kombinierte Aufbereitungseinheit übernommen.

Mit anderen Worten wird durch den als Kristallisator ausgebildeten Auffangbehälter die Schlüsselkomponente eines gängigen SOₓ-Reclaimers in einen NOₓ-Reclaimer integriert, so dass auf einen SOₓ-Reclaimer als separate Teilanlage verzichtet werden kann.

Durch die Kombination eines gängigerweise im NOₓ-Reclaimingprozess eingesetzten Verdampfers und/oder Wärmetauschers mit einem als ein Kristallisator ausgebildeten Auffangbehälter wird ein vollwertiger Verdampfungskristallisator bereit gestellt, der eine kontrollierte Kristallisation des Sulfats aus dem Waschmedium ermöglicht. Durch die Verlagerung der Kristallisation in den Auffangbehälter des Verdampfungskristallisators wird der Verdampfer vor Belagwachstum geschützt bzw. werden die Verkrustungen und deren Eintrittswahrscheinlichkeit erheblich reduziert.

Ein in der Verdampfungsstufe eingesetzter Verdampfer kann beispielsweise als ein Fallfilmverdampfer oder als ein Dünnschichtverdampfer ausgebildet sein. Ausgehend von dem Verdampfer wird das in diesem eingedickte, bzw. aufkonzentrierte Waschmedium in den Auffangbehälter geleitet. Die Eindickung erfolgt durch eine Aufkonzentrierung der Aktivkomponente des Waschmediums, wozu Wasser innerhalb des Verdampfers aus dem Waschmedium ausgetrieben wird.

Wird ein Wärmetauscher in der Verdampfungsstufe eingesetzt, erfolgt in diesem die Erwärmung des insbesondere partikelbeladenen Waschmediums. Das erwärmte Waschmedium wird dann zur Abtrennung der Partikel ebenfalls in den Auffangbehälter geleitet. Insgesamt lassen sich durch eine Verdampfungsstufe mit einem Wärmetauscher und einem Auffangbehälter der Vorgang des Erwärmens des Waschmediums und des Verdampfens des Waschmediums zur Eindickung bzw. zur Aufkonzentrierung des Waschmediums voneinander trennen.

Als Kombination eines Wärmetauschers mit einem entsprechenden Auffangbehälter sind beispielsweise Oslo-Kristallisatoren, Leitrohr-Kristallisatoren oder FC (forced circulation)- Kristallisatoren bekannt.

Bei einem FC-Kristallisator, der als Umlaufkristallisator dient, wird dem Auffangbehälter ein Teilstrom, also eine Suspension von Kaliumsulfat im Waschmedium, entnommen und durch die Heizrohre des Wärmetauschers gepumpt. Die im Wärmetauscher erwärmte Suspension wird dann wieder in den Auffangbehälter zurückgeführt. Durch einen Unterdruck im Auffangbehälter verdampft Wasser an der Grenzfläche des Auffangbehälters. Der Wasserdampf wird abgezogen, wodurch in dem Auffangbehälter eine Übersättigung entsteht und Partikel auskristallisieren. Die auskristallisierten Partikel können als Produktstrom abgezogen und einer Verwertung zugeführt werden.

In der Aufbereitungseinheit können insbesondere Sulfate von Alkalimetallen abgetrennt werden. Durch den Einsatz von kaliumhaltigen Waschmedien ist jedoch insbesondere die Kristallisation von Kaliumsulfat aus dem Waschmedium möglich und erwünscht.

Um die Kristallisatorfunktion des Auffangbehälters sicherzustellen, ist es insbesondere zweckmäßig, dass der Auffangbehälter gegenüber den in üblichen NOₓ-Reclaimern eingesetzten Auffangbehältern größer dimensioniert ist. Zur Durchmischung des Waschmediums bzw. der Suspension aus Waschmedium und auskristallisierten Sulfatpartikeln ist der Auffangbehälter mit einem entsprechenden Rührwerk ausgestattet. Alternativ ist zur Durchmischung auch ein Umpumpen möglich.

Die Zufuhr des aufzubereitenden Waschmediums in den Auffangbehälter erfolgt zweckmäßigerweise durch dessen Kopplung mit einer Desorbereinheit einer Abscheidevorrichtung, von der ausgehend ein sulfatreicher Eingangsstrom an Waschmedium der Aufbereitungseinheit zugeführt wird.

In einer vorteilhaften Ausgestaltung der Erfindung umfasst der Auffangbehälter eine Kristallisationskammer zur Bildung der Sulfatpartikel. Bevorzugt ist im Auffangbehälter auch eine Klassiereinrichtung zur Trennung der auskristallisierten Sulfatpartikel nach ihrer Partikelgröße umfasst. Die auskristallisierten Partikel sind hierbei insbesondere Kaliumsulfatpartikel. Die Kristallisationskammer, in der insbesondere die Kaliumsulfatpartikel gebildet werden, besteht dabei vorzugsweise aus einem im Wesentlichen zylinderförmigen Behälter, in welchem sich das Waschmedium und die wachsenden Sulfatpartikel befinden. In der Klassiereinrichtung erfolgt die Trennung der gebildeten Sulfatpartikel ihrer Partikelgröße nach. Hierbei werden die großen Sulfatpartikel weitestgehend von den mittleren und kleinen Sulfatpartikeln getrennt.

In einer weiter bevorzugten Ausgestaltung der Erfindung ist die Klassiereinrichtung zur Trennung der Sulfatpartikel nach ihrer Partikelgröße in Form einer Klassierzone mit einem ersten Klassierbereich und einem zweiten Klassierbereich innerhalb des Kristallisators ausgebildet. Es handelt sich somit um eine interne Klassierzone, die zweckmäßigerweise im Randbereich des Kristallisators vorgesehen ist. Hierbei ist die Klassierzone vorzugsweise als eine konzentrische Beruhigungszone ausgebildet, in der beispielsweise sogenannte Beruhigungsbleche eingesetzt sind. Der Auffangbehälter und der Verdampfer stellen somit einen Verdampfungskristallisator mit interner Klassierfunktion dar.

Weiter bevorzugt ist der Auffangbehälter mit einer Trenneinheit verbunden. Die Trenneinheit dient der Fest-Flüssig-Trennung einer aus dem Auffangbehälter bzw. dem Kristallisator abgezogenen Suspension. Das zur Abtrennung der reinen Aktivkomponente bislang direkt aus Verdampfer bzw. dem angeschlossenen Auffangbehälter des NOₓ-Reclaimers in den Kristallisator des SOₓ-Reclaiming-Prozesses geführte Waschmedium wird somit zuerst im Rahmen einer Fest-Flüssig-Trennung in der Trenneinheit von auskristallisiertem Sulfat gereinigt. Der hierbei entstehende Oberlauf der Trenneinheit ist ein partikelarmer Klarlauf, der anschließend unterschiedlich weiterverwendet werden kann.

Der entstehende Unterlauf der Trenneinheit enthält die im Rahmen der Fest-Flüssig-Trennung abgetrennten Sulfatpartikel. Um die in dem Unterlauf enthaltenen Sulfatpartikel als Kristallkeime in dem Auffangbehälter nutzen zu können, ist ein weiterer Auslass der Trenneinheit zweckmäßigerweise mit einem Einlass des Auffangbehälters verbunden.

Grundsätzlich können zur Fest-Flüssig-Trennung in der Trenneinheit verschiedene Apparate eingesetzt werden, die die gewünschte Abtrennung der noch in der der Trenneinheit zugeführten Suspension enthaltenen Sulfatpartikel von Waschmedium erlauben. Von Vorteil ist es, wenn die Trenneinheit als ein Hydrozyklon ausgebildet ist. Ein Hydrozyklon ist ein Fliehkraftabscheider für Flüssiggemische, in dem in einer Suspension enthaltene Feststoffpartikel abgetrennt oder klassiert werden. Im Rahmen der Fest-Flüssig-Trennung werden hierbei die Partikel an der Wand des Zyklons abgeschieden und durch den Unterlauf ausgetragen, während die im Wesentlichen partikelfreie Fraktion durch einen Oberlauf entweicht.

Bevorzugt wird im Falle einer Klassiereinrichtung die aus dem ersten Klassierbereich des Auffanggefäßes abgezogene Suspension der Trenneinheit zugeführt, die im Wesentlichen lediglich Sulfatpartikel mittlerer und kleiner Größe umfasst.

Zweckmäßigerweise ist ein Auslass der Trenneinheit mit einem zusätzlichen Kristallisator zur Rückgewinnung der Aktivkomponente des Waschmediums verbunden. Die Trenneinheit ist somit dem als Kristallisator ausgebildeten Auffangbehälter und dem Kristallisator des NOₓ-Reclaimers strömungstechnisch zwischengeschaltet, so dass die Überführung eines ersten sulfat- und partikelarmen Teilstroms von der Trenneinheit in den Kristallisator des NOₓ-Reclaimers erfolgen kann. Der erste Teilstrom ist hierbei zweckmäßig ein Teilstrom des Oberlaufs der Trenneinheit.

Die Aufbereitung im Kristallisator unter Rückgewinnung der im Waschmedium enthaltenen Aktivkomponente, also beispielsweise eines Kalium-Aminosäuresalzes, erfolgt durch die Zugabe von Kohlendioxid und die damit verbundene Absenkung des pH-Werts des Waschmediums bei gleichzeitiger Kühlung. Hierdurch wird die Aktivkomponente ausgefällt und kann schließlich wieder in den Prozess zurückgeführt werden. Die weiteren Nebenbestandteile und Abbauprodukte, wie insbesondere auch Nitrite und Nitrate, sowie Degradationsprodukte, werden in gelöster Form als Abfallstrom aus dem Prozess entfernt und können dann einer Abfallverwertung zugeführt werden.

Besonders von Vorteil ist es, wenn ein Auslass der Trenneinheit mit einem Einlass des Verdampfers verbunden ist. Ein zweiter Teilstrom des Oberlaufs der Trenneinheit, der Hauptstrom, gelangt hierbei wie bislang üblich in den Verdampfer, um dort Wasser zwecks Aufkonzentrierung der Aktivkomponente des Waschmediums und der damit verbundenen Eindickung des Waschmediums auszuschleusen.

In einer weiter bevorzugten Ausgestaltung ist der Auffangbehälter über einen Auslass mit einem Einlass des Auffangbehälters verbunden. Eine solche Ausgestaltung ist insbesondere dann von Vorteil, wenn die Verdampfungsstufe einen Wärmetauscher umfasst, dem der Auffangbehälter angeschlossen ist. Der Wärmetauscher ist zweckmäßigerweise zwischen den Auslass des Auffangbehälters und den Einlass des Auffangbehälters geschaltet, so dass das entnommene Waschmedium in einem Umlauf über den Wärmetauscher geführt werden kann. Das Erwärmen des Waschmediums erfolgt innerhalb des Wärmetauschers der Verdampfungsstufe, die Verdampfung von Wasser und die daraus resultierende Übersättigung des Waschmediums erfolgen innerhalb des Auffangbehälters der Verdampfungsstufe.

Zweckmäßigerweise ist ein Auslass der Trenneinheit mit einem Einlass des Auffangbehälters verbunden. Über diese Verbindung wird ein Teilstrom des der Trenneinheit entnommenen Oberlaufs, vorzugsweise der Hauptstrom, über diese Verbindung in den Auffangbehälter zurückgeführt. Eine solche Verbindung ist zweckmäßig, wenn in der Verdampfungsstufe ein mit dem Auffangbehälter verbundener Wärmetauscher eingesetzt ist.

In einer weiter vorteilhaften Ausgestaltung ist ein Auslass der Trenneinheit mit dem Einlass einer Absorbereinheit einer Abscheidevorrichtung für Kohlendioxid verbunden. So kann ein dritter Teilstrom des Oberlaufs der Trenneinheit wieder in den Abscheideprozess für Kohlendioxid aus einem Rauchgas rückgeführt werden. Eine solche Rückführung ist insbesondere dann von Vorteil, wenn für die Ausschleusung des Sulfats mehr Waschmedium behandelt werden muss, als es zur mit Verlusten des Waschmediums verbundenen Regeneration des Waschmediums wirtschaftlich erforderlich wäre.

In einer weiter vorteilhaften Ausgestaltung ist dem Auffangbehälter eine Dosiervorrichtung zur Einstellung einer Alkalikonzentration, insbesondere einer Kaliumkonzentration, im Waschmedium angeschlossen. Durch die Dosiervorrichtung ist es möglich, die Alkali- bzw. Kaliumbilanz im Prozess konstant zu halten. Dies kann beispielsweise durch die Zufuhr oder den Entzug von Kalium aus dem Prozess erfolgen. Eine Kaliumzufuhr ist hierbei eher bei schwefelreichen Rauchgasen von Kohlekraftwerksanwendungen zu erwarten, bei denen der SOₓ- Reclaimer dominant ist. Bei sehr schwefelarmen Prozessen, wie typischerweise bei Gaskraftwerksanwendungen, bei denen der NOₓ-Reclaimer dominiert, kann sich Kalium aufkonzentrieren, welches dann aus dem Prozess entfernt werden muss.

Zweckmäßigerweise ist der zweite Klassierbereich über einen Auslass des Auffanggefäßes mit einer Verwertungseinrichtung für das ausgefällte Sulfat, insbesondere für Kaliumsulfat, gekoppelt. Bei einer Kristallisation und Klassifizierung der Sulfatpartikel ihrer Größe nach kann so eine Suspension aus dem zweiten Klassierbereich, der sich vorzugsweise am Boden des Auffangbehälters befindet, abgezogen werden. Hierzu ist zweckmäßigerweise eine als Sumpfpumpe ausgebildete Pumpe eingesetzt, die das auskristallisierte Sulfat aus dem Prozess ausschleust. Die hierbei ausgeschleuste Suspension hat typischerweise einen Anteil von Kaliumsulfat zwischen 3 Gew.-% und 10 Gew.-%, der sich in einem Auffangbehälter der Verwertungseinrichtung anreichert. Der Feststoffanteil kann hierbei über das Verhältnis der Austragsrate der Sumpfpumpe zur Austragsrate der Pumpen für die dem Kristallisator des NOₓ-Reclaimers und dem Hauptprozess zugeführten partikelarmen Ausgangsstrom eingestellt werden.

Der aus dem Auffangbehälter bzw. dem Kristallisator entnommenen Suspension können insbesondere die Kaliumsulfatpartikel durch eine Fest-Flüssig-Trennung abgetrennt, weiter aufbereitet und schließlich zu einer Lagerung oder einer Weiterverwendung, beispielsweise als Düngemittel genutzt werden. Als Trennapparat zur Fest-Flüssig-Trennung kann beispielsweise ein Filter, ein Dekanter oder eine Zentrifuge eingesetzt sein.

Aufgrund seiner guten Absorptionskapazität ist als Aktivkomponente des Waschmediums zweckmäßigerweise ein Aminosäuresalz, insbesondere ein kaliumhaltiges Aminosäuresalz, eingesetzt.

Die zweite Aufgabe der Erfindung wird erfindungsgemäß gelöst durch eine Abscheidevorrichtung für Kohlendioxid, umfassend eine Absorbereinheit zur Abtrennung von Kohlendioxid aus einem Rauchgas mittels eines Waschmediums, sowie eine der Absorbereinheit strömungstechnisch nachgeschaltete Desorbereinheit zur Abtrennung des Kohlendioxids aus dem Waschmedium, dadurch gekennzeichnet, dass der Desorbereinheit eine vorstehend beschriebene Aufbereitungseinheit strömungstechnisch nachgeschaltet ist.

Die Absorbereinheit und die Desorbereinheit sind strömungstechnisch über Leitungen miteinander verbunden, in denen das mit Kohlendioxid beladene Waschmedium und das entsprechend regenerierte Waschmedium zirkulieren. Während des Abscheideprozesses wird mittels der Abscheidevorrichtung im Rauchgas enthaltenes Kohlendioxid mittels des Waschmediums aus dem Rohgas herausgewaschen. Das Waschmedium wird zur Regeneration der Aufbereitungseinheit zugeführt, in der sowohl Stickoxide als auch Schwefeloxide, sowie deren Folgeprodukte in einem gemeinsamen Reclaimingprozess entfernt werden können.

Die für die vorbeschriebene Abtrenneinheit und deren vorteilhaften Ausführungen genannten Vorteile können sinngemäß auf die Abscheidevorrichtung übertragen werden.

Die dritte Aufgabe der Erfindung wird erfindungsgemäß gelöst durch ein Verfahren zur Aufbereitung eines mit Schwefeloxiden und/oder Stickoxiden verunreinigten Waschmediums, wobei das Waschmedium zur Aufkonzentrierung seiner Aktivkomponente einer Verdampfungsstufe mit einem Verdampfer und/oder mit einem Wärmetauscher, sowie mit einem strömungstechnisch mit dem Verdampfer und/oder dem Wärmetauscher verbundenen Auffangbehälter zugeführt wird, dadurch gekennzeichnet, dass in dem Auffangbehälter im Waschmedium enthaltene Schwefeloxide als Sulfatpartikel, insbesondere als Kaliumsulfatpartikel, auskristallisiert werden.

Mit anderen Worten ist der Auffangbehälter als ein Kristallisator ausgebildet, in dem die im Waschmedium enthaltenen Schwefeloxide als Sulfatpartikel, insbesondere als Kaliumsulfatpartikel, auskristallisiert werden.

In einer vorteilhaften Ausgestaltung der Erfindung werden die Sulfatpartikel in einer Kristallisationskammer des Auffangbehälters gebildet. Weiter bevorzugt werden die Sulfatpartikel in einer Klassiereinrichtung des Auffangbehälters nach ihrer Partikelgröße getrennt. Bei der Klassierung, die vorzugsweise in einer integrierten Klassierzone im Randbereich des Kristallisators erfolgt, werden die großen Sulfatpartikel, insbesondere die großen Kaliumsulfatpartikel, weitestgehend von den mittleren und kleinen Kaliumsulfatpartikeln getrennt.

Vorteilhafterweise werden die Sulfatpartikel aus dem Auffangbehälter einer Trenneinheit zugeführt. Vorzugsweise wird im Falle einer Klassiereinrichtung ein erster Teilstrom mit im Wesentlichen kleinen und mittleren Sulfatpartikeln, insbesondere mit im Wesentlichen kleinen und mittleren Kaliumsulfatpartikeln, aus dem Auffangbehälter der Trenneinheit zugeführt. In der Trenneinheit werden die im Waschmedium noch vorhandenen Sulfatpartikel aus dem Waschmedium abgetrennt. Diese können als Unterlauf der Trenneinheit in einer weiter vorteilhaften Ausgestaltung als Kristallkeime wieder dem Auffangbehälter zugeführt werden.

In einer vorteilhaften Ausgestaltung wird ein zweiter Teilstrom aus dem Auffangbehälter dem Wärmetauscher zugeführt. Der zweite Teilstrom wird hierzu vorzugsweise am Boden des Auffangbehälters aus dem zweiten Klassierbereich entnommen und enthält insbesondere große Sulfatpartikel. Der zweite Teilstrom wird dann im Wärmetauscher erhitzt.

Um eine Übersättigung des Waschmediums zu erreichen, wird der zweite Teilstrom nach Passieren des Wärmetauschers zweckmäßigerweise in den Auffangbehälter zurückgeführt. Hier wird durch den im Auffangbehälter vorherrschenden Unterdruck von vorzugsweise 100 mbar das Wasser unter Wärmeabfuhr an den Grenzflächen des Auffangbehälters verdampft. Durch einen Abzug des Wassers, bzw. des Wasserdampfes entsteht eine Übersättigung und die Partikel in der Lösung wachsen.

Weiter bevorzugt wird ein erster Teilstrom des Oberlaufs der Trenneinheit zur Rückgewinnung der Aktivkomponente des Waschmediums einem zusätzlichen Kristallisator zugeführt. Der Oberlauf ist hierbei der partikelarme Klarlauf, der die Trenneinheit nach erfolgter Fest-Flüssig-Trennung über ihren Auslass verlässt. Durch die Zufuhr des ersten Teilstroms in den zusätzlichen Kristallisator können neben der gewünschten Rückgewinnung der Aktivkomponente des Waschmediums zusätzlich unerwünschte Nebenbestandteile und Abbauprodukte aus dem Waschmedium entfernt werden und als Abfallstrom einer Verwertung zugeführt werden.

Zweckmäßigerweise wird ein zweiter Teilstrom des Oberlaufs der Trenneinheit dem Verdampfer zugeführt und steht damit zur Ausschleusung von Wasser zwecks Aufkonzentrierung der Aktivkomponente des Waschmediums zur Verfügung. Ein dritter Teilstrom des Oberlaufs der Trenneinheit wird in einer weiter vorteilhaften Ausgestaltung einer Absorbereinheit einer Abscheidevorrichtung zugeführt.

Bei dem Einsatz eines Wärmetauschers erfolgt die Zufuhr des ersten Teilstroms des Oberlaufs vorzugsweise ebenfalls zu einem zusätzlichen Kristallisator zur Rückgewinnung der Aktivkomponente des Waschmediums. Auch die Zufuhr des dritten Teilstroms des Oberlaufs zu einer Absorbereinheit einer Abscheidevorrichtung ist besonders von Vorteil. Die Zufuhr des zweiten Teilstroms des Oberlaufs der Trenneinheit erfolgt bevorzugt in den Auffangbehälter. Hierzu ist der Auslass der Trenneinheit zweckmäßigerweise mit einem Einlass des Auffangbehälters verbunden.

Vorteilhafterweise wird eine Alkalikonzentration, insbesondere eine Kaliumkonzentration, im Waschmedium über eine dem Auffangbehälter angeschlossene Dosiervorrichtung eingestellt, wodurch je nach Bedarf die Alkalikonzentration im Prozess erhöht oder gesenkt werden kann.

Vorzugsweise wird ein mit Sulfatpartikeln angereicherter zweiter Teilstrom mit im Wesentlichen großen Sulfatpartikeln, insbesondere mit im Wesentlichen großen Kaliumsulfatpartikeln, aus dem Auffangbehälter einer Verwertungseinrichtung zugeführt. Hierzu kann beispielsweise eine Sumpfpumpe eingesetzt werden, die sich zur Förderung von Flüssigkeiten mit großen Feststoffanteilen eignet und den zweiten Teilstrom am Boden des Auffangbehälters abzieht.

Zweckmäßigerweise wird als Aktivkomponente des Waschmediums ein Aminosäuresalz, insbesondere ein kaliumhaltiges Aminosäuresalz, eingesetzt.

Die für die Aufbereitungseinheit und für die Abscheidevorrichtung und deren Weiterbildungen genannten Vorteile können sinngemäß auf die vorteilhaften Ausführungen des Verfahrens übertragen werden.

Im Folgenden werden Ausführungsbeispiele der Erfindung anhand einer Zeichnung näher erläutert. Dabei zeigen:
- FIG 1: eine Aufbereitungseinheit für ein mit Schwefeloxiden und/oder Stickoxiden verunreinigtes Waschmedium mit einem Verdampfer und einem diesen angeschlossenen Auffangbehälter, sowie
- FIG 2: eine Abscheidevorrichtung für Kohlendioxid mit einer Aufbereitungseinheit gemäß FIG 1.

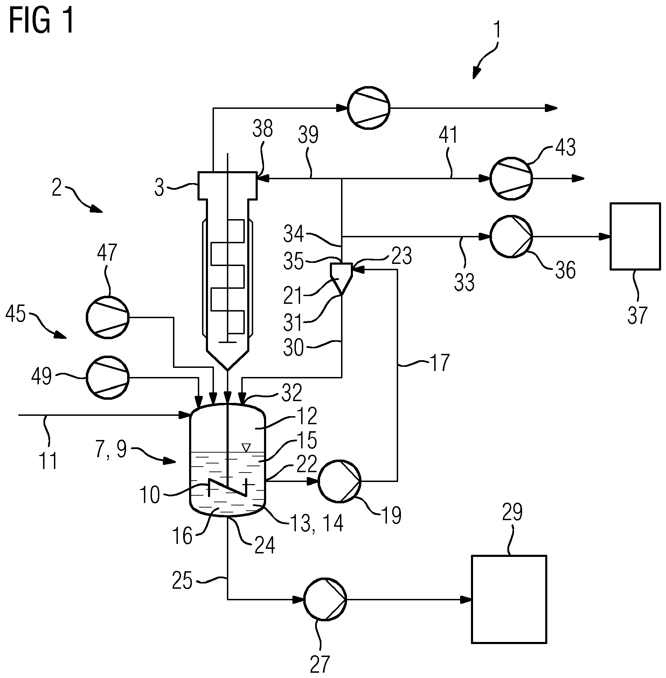

In FIG 1 ist eine Aufbereitungseinheit 1 für ein mit Schwefeloxiden und/oder Stickoxiden verunreinigtes Waschmedium gezeigt. Die Aufbereitungseinheit 1 umfasst eine Verdampfungsstufe 2 mit einem als Dünnschichtverdampfer ausgebildeten Verdampfer 3 zur Eindickung von verunreinigtem Waschmedium durch Aufkonzentrierung der Aktivkomponente des Waschmediums, sowie mit einem dem Verdampfer 3 angeschlossenen Auffangbehälter 7.

Ein solcher Auffangbehälter 7 wird grundsätzlich bei der Aufbereitung von Waschmedium in einem NOₓ-Reclaimer eingesetzt, in dem er als Vorlagebehälter bzw. als Pumpenvorlage für das einem Kristallisator des NOₓ-Reclaimers zuführbare Waschmedium dient.

Im Unterschied hierzu ist der Auffangbehälter 7 der Aufbereitungseinheit 1 als ein Kristallisator 9 zur Entfernung von Schwefeloxiden aus dem Waschmedium durch Kristallisation von Kaliumsulfat ausgebildet. Der Kristallisator 9 ist gegenüber bislang eingesetzten Auffangbehältern größer dimensioniert und gegebenenfalls, jedoch nicht zwingend mit einem Rührwerk 10 ausgestattet.

Die Zufuhr des Waschmediums in dem als Kristallisator 9 ausgebildeten Auffangbehälter 7 erfolgt ausgehend von einer nicht gezeigten Desorptionseinheit einer Abscheidevorrichtung für Kohlendioxid. Ausgehend von der Desorptionseinheit wird ein sulfatreicher Eingangsstrom 11 mit ca. 30 Gew.-% eines als Aktivkomponente des Waschmediums eingesetzten Aminosäuresalzes in den Auffangbehälter 7 geführt und dort mit eingedicktem Waschmedium (ca. 60 Gew.-%) des Aminosäuresalzes aus dem Verdampfer 3 vermischt. Der Eingangsstrom 11 hat eine Eintrittstemperatur zwischen 30°C und 40°C, wohingegen die Temperatur im Auffangbehälter 7 zwischen 60°C und 65°C liegt. Trotz des Temperaturanstiegs sinkt die Löslichkeit des Kaliumsulfats innerhalb des Waschmediums stark ab und das Waschmedium wird übersättigt.

Die Übersättigung des Waschmediums baut sich dann durch die Kristallisation von Kaliumsulfat im Kristallisator 9 ab. Hierzu ist der Kristallisator 9 mit einer Kristallisationskammer 12 ausgebildet.

Zusätzlich umfasst der Kristallisator 9 eine Klassiereinrichtung 13, die eine Trennung der in der Kristallisationskammer 12 auskristallisierten Kaliumsulfatpartikel nach ihrer Partikelgröße ermöglicht. Die Klassiereinrichtung 13 ist in Form einer Klassierzone 14 mit einem ersten Klassierbereich 15 und einem zweiten Klassierbereich 16 innerhalb des Kristallisators 9 ausgebildet. In dem ersten Klassierbereich 15 sammeln sich im Wesentlichen Kaliumsulfatpartikel mittlerer und kleiner Größe, wobei sich im zweiten Klassierbereich 16 die großen Kaliumsulfatpartikel sammeln. Der Auffangbehälter 7 und der Verdampfer 3 stellen somit einen Verdampfungskristallisator mit interner Klassierfunktion dar.

Nach der Trennung der Kaliumsulfatpartikel ihrer Partikelgröße nach wird ein erster Teilstrom 17 des Waschmediums mittels einer Pumpe 19 aus dem Auffangbehälter 7 einer als Hydrozyklon ausgebildeten Trenneinheit 21 zugeführt. Hierzu ist der erste Klassierbereich 15 über den Auslass 22 des Auffangbehälters 7 mit einem Einlass 23 der Trenneinheit 21 gekoppelt. Der erste Teilstrom 17 umfasst im Wesentlichen die mittleren und kleinen Kaliumsulfatpartikel, die in der Klassierzone 15 des Kristallisators 9 von den schweren Partikeln abgetrennt worden sind.

Weiterhin wird über einen Auslass 24 des Auffanggefäßes 7 ein mit Kaliumsulfatpartikeln angereicherter zweiter Teilstrom 25 aus dem zweiten Klassierbereich 16 mittels einer als Sumpfpumpe ausgebildeten Pumpe 27 aus dem Auffangbehälter 7 einer Verwertungseinrichtung 29 zugeführt. Die hierbei ausgeschleuste Suspension, also der zweite Teilstrom 25, hat einen Anteil von Kaliumsulfat zwischen 3 Gew.-% und 10 Gew.-%, wobei der Feststoffanteil über die Austragsrate der Sumpfpumpe 27 eingestellt werden kann.

In der Trenneinheit 21 werden die im ersten Teilstrom 17 enthaltenen mittleren und kleinen Partikel des Kaliumsulfats vom Waschmedium abgetrennt. Der Unterlauf 30, der bei Fest-Flüssig-Trennung entsteht, enthält die aus dem Waschmedium abgetrennten Kaliumsulfatpartikel, die dann über eine Kopplung des Auslasses 31 der Trenneinheit 21 mit einem Einlass 32 des Auffangbehälters 7 als Kristallkeime wieder dem Kristallisationsprozess zugeführt werden.

Ein erster Teilstrom 33 des bei dieser Fest-Flüssig-Trennung entstehenden Oberlaufs 34, also eines partikelarmen Klarlaufs, wird dann von einem Auslass 35 der Trenneinheit 21 mittels einer Pumpe 36 einem zusätzlichen Kristallisator 37 zur Rückgewinnung der Aktivkomponente des Waschmediums zugeführt. Der Kristallisator 37 ist als Kristallisator für den NOₓ-Reclaimingprozess ausgebildet.

Weiter ist die Trenneinheit 21 mit dem Verdampfer 3 gekoppelt. Die Kopplung erfolgt über den Auslass 35 der Trenneinheit mit einem Einlass 38 des Verdampfers 3. Ein zweiter Teilstrom 39 des Oberlaufs 34, der Hauptstrom, kann so wieder in den Verdampfer 3 zurückgeführt werden und dort zwecks Aufkonzentrierung der Aktivkomponente des Waschmediums Wasser aus diesem ausschleusen.

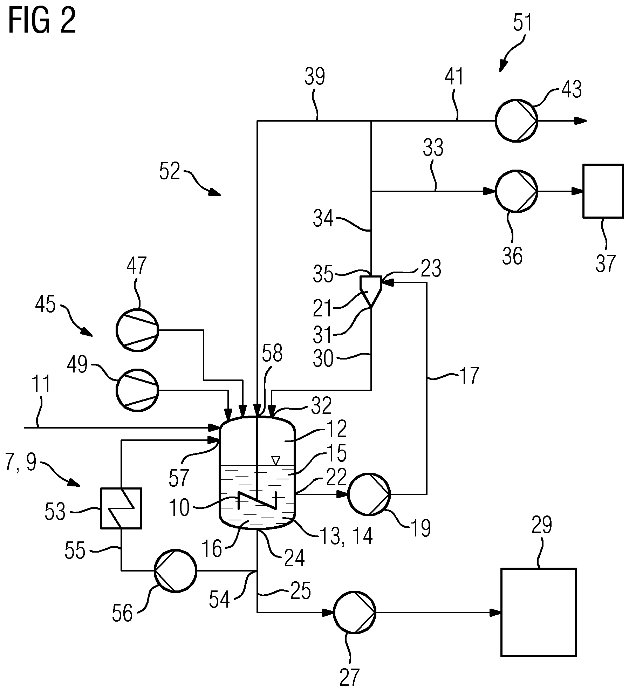

Ein dritter Teilstrom 41 des Oberlaufs 34 der Trenneinheit 21 wird mittels einer Pumpe 43 einer nicht gezeigten Absorbereinheit einer Abscheidevorrichtung für Kohlendioxid zugeführt. Hierzu ist der Auslass 35 der Trenneinheit 21 mit dem Einlass 44 der Absorbereinheit gekoppelt, was in FIG 2 gezeigt ist. Eine derartige Rückführung bietet sich an, wenn für die Ausschleusung des Kaliumsulfats mehr Waschmedium behandelt werden muss, als es zur mit Verlusten des Waschmediums verbundenen Regeneration des Waschmediums wirtschaftlich erforderlich wäre.

Zur Einstellung der Kaliumkonzentration im Waschmedium ist dem als Kristallisator 9 ausgebildeten Auffangbehälter 7 eine Dosiervorrichtung 45 angeschlossen. Die Dosiervorrichtung 45 umfasst zwei Pumpen 47, 49, mittels derer zusätzliche Reaktanden dem System zugeführt werden können, um so eine unerwünschte Aufkonzentrierung von Kalium zum Beispiel bei Gaskraftwerksanwendungen oder alternativ eine unerwünschte Verarmung an Kalium zum Beispiel bei Kohlekraftwerksanwendungen zu verhindern.

In FIG 2 ist eine weitere Aufbereitungseinheit 51 für ein mit Schwefeloxiden und/oder Stickoxiden verunreinigtes Waschmedium gezeigt zu sehen. Die Aufbereitungseinheit 51 umfasst eine Verdampfungsstufe 52 mit einem Wärmetauscher 53, sowie einen dem Wärmetauscher 53 angeschlossenen Auffangbehälter 7. Diese Kombination des Wärmetauschers 53 und des Auffangbehälters 7 ist als ein FC (forced circulation)-Kristallisator bekannt.

Im Unterschied zur Verdampfungsstufe 2 gemäß FIG 1 wird vorliegend über einen zweiten Auslass 54 ein zweiter Teilstrom 55 aus dem Auffangbehälter 7 entnommen. Der zweite Teilstrom 55 wird dem Wärmetauscher 53 mittels einer Pumpe 56 zugeführt. In dem Wärmetauscher 53 passiert der zweite Teilstrom 55 Heizrohre und wird entsprechend erwärmt. Nach dem Passieren des Wärmetauschers 53 wird der erwärmte zweite Teilstrom 55 über den Einlass 57 des Auffangbehälters 7 diesem zugeführt.

Im Auffangbehälter 7 herrscht ein Unterdruck von etwa 100 mbar, wodurch Wasser unter Wärmeabfuhr an den Grenzflächen des Auffangbehälters 7 verdampft. Durch einen Abzug des Wassers, bzw. des Wasserdampfes entsteht eine Übersättigung und die Partikel in dem Waschmedium wachsen.

Da die Aufbereitungseinheit 51 bzw. die Verdampfungsstufe 52 im Unterschied zur Aufbereitungseinheit 1 gemäß FIG 1 statt eines Verdampfers den Wärmetauscher 53 umfasst, wird der dem Auslass 35 der Trenneinheit 21 entnommene zweite Teilstrom 39 des Oberlaufs 34 dem Auffangbehälter 7 zugeführt. Hierzu ist der Auslass 35 der Trenneinheit 21 mit einem Einlass 58 des Auffangbehälters 7 verbunden.

Hinsichtlich der Beschreibung der Funktion der weiteren Komponenten der Aufbereitungseinheit 51 wird an dieser Stelle auf die detaillierte Beschreibung der Aufbereitungseinheit 1 gemäß FIG 1 verwiesen.

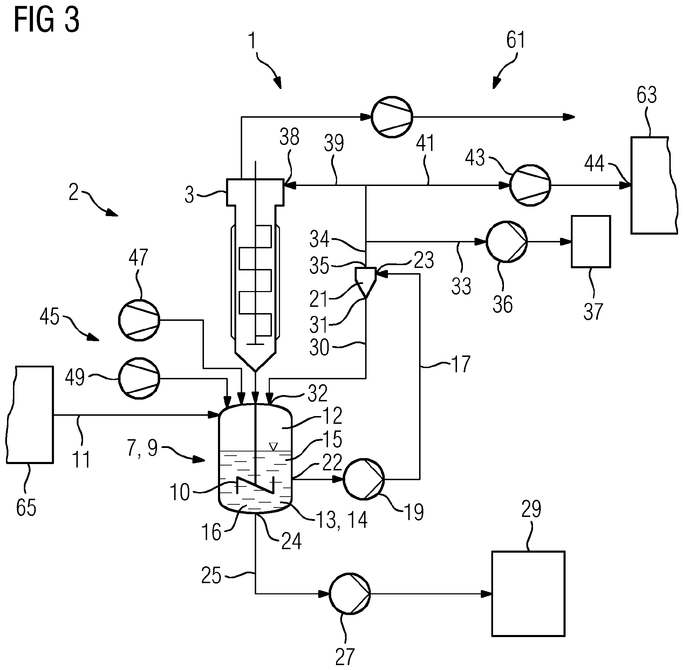

In FIG 3 ist eine Abscheidevorrichtung 61 für Kohlendioxid mit einer Aufbereitungseinheit 1 gemäß FIG 1 gezeigt. Die Abscheidevorrichtung 61 umfasst eine Absorbereinheit 63 und eine strömungstechnisch mit dieser gekoppelte Desorbereinheit 65. Die Aufbereitungseinheit 1 ist der Aufbereitungseinheit strömungstechnisch nachgeschaltet.

In der Absorbereinheit 63 wird ein Rauchgasstrom mit dem Waschmedium, einem kaliumhaltigen Aminosäuresalz in Kontakt gebracht und das im Waschmedium enthaltenden Kohlendioxid in dem Waschmedium absorbiert. Gleichzeitig werden auch im Rauchgas enthaltene Schwefeloxide und Stickoxide mit in Absorbereinheit 63 eingetragen und im Waschmedium absorbiert. Das beladene Waschmedium wird dann über nicht gezeigte Wärmetauscher in die Desorbereinheit 65 geführt, wo das absorbierte Kohlendioxid durch thermische Desorption aus dem Waschmedium entfernt wird.

Die im Waschmedium verbliebenen Stickoxide (NOₓ) und Schwefeloxide (SOₓ) werden dann in der der Desorbereinheit 65 strömungstechnisch nachgeschalteten Aufbereitungseinheit 1 aus dem Waschmedium entfernt und dieses entsprechend zur erneuten Verwendung im Rahmen des Absorptions-Desorptions-Prozesses regeneriert. Hierzu wird das Waschmedium als Eingangsstrom 11 in der Auffangbehälter 7 der Aufbereitungseinheit 1 eingebracht. Die entsprechende Aufbereitung des Waschmediums ist detailliert in FIG 1 beschrieben, auf die an dieser Stelle verwiesen wird.

Selbstverständlich kann auch die in FIG 2 gezeigte Aufbereitungseinheit 51 in eine Abscheidevorrichtung 61 eingesetzt werden.

## Patentansprüche

1. Aufbereitungseinheit (1, 51) für ein mit Schwefeloxiden und/oder Stickoxiden verunreinigtes flüssiges Waschmedium, umfassend eine Verdampfungsstufe (2, 52) zur Aufkonzentrierung der Aktivkomponente des Waschmediums mit einem Verdampfer (3) und/oder mit einem Wärmetauscher (53), mit einem dem Verdampfer (3) und/oder dem Wärmetauscher (53) angeschlossenen Auffangbehälter (7), wobei der Auffangbehälter (7) über einen Auslass (22) mit einer Trenneinheit (21) verbunden ist, **dadurch gekennzeichnet, dass** der Auffangbehälter (7) als ein Kristallisator (9) zur Entfernung von Schwefeloxiden aus dem Waschmedium durch Kristallisation eines Sulfats, insbesondere von Kaliumsulfat, ausgebildet ist, und dass ein Auslass (35) der Trenneinheit (21) mit einem zusätzlichen Kristallisator (37) zur Rückgewinnung der Aktivkomponente des Waschmediums verbunden ist.

2. Aufbereitungseinheit (1, 51) nach Anspruch 1,
**dadurch gekennzeichnet, dass** die Trenneinheit (21) als ein Hydrozyklon ausgebildet ist.

3. Aufbereitungseinheit (1, 51) nach Anspruch 1 oder 2, **dadurch gekennzeichnet, dass** der Auffangbehälter (7) eine Klassiereinrichtung (13) zur Trennung der auskristallisierten Sulfatpartikel nach ihrer Partikelgröße umfasst.

4. Aufbereitungseinheit (1, 51) nach Anspruch 3,
**dadurch gekennzeichnet, dass** die Klassiereinrichtung (13) in Form einer Klassierzone (14) mit einem ersten Klassierbereich (15) und einem zweiten Klassierbereich (16) innerhalb des Kristallisators (9) ausgebildet ist, wobei der erste Klassierbereich (14) über einen ersten Auslass (22) des Auffangbehälters (7) mit einem Einlass (23) der Trenneinheit (21) verbunden ist.

5. Aufbereitungseinheit (1, 51) nach einem der vorhergehenden Ansprüche,
**dadurch gekennzeichnet, dass** ein Auslass (35) der Trenneinheit (21) mit einem Einlass (38) des Verdampfers (3) verbunden ist.

6. Aufbereitungseinheit (1, 51) nach einem der vorhergehenden Ansprüche,
**dadurch gekennzeichnet, dass** der Auffangbehälter (7) über einen Auslass (54) mit einem Einlass (57) des Auffangbehälters (7) verbunden ist.

7. Aufbereitungseinheit (1, 51) nach einem der vorhergehenden Ansprüche,
**dadurch gekennzeichnet, dass** ein Auslass (35) der Trenneinheit (21) mit einem Einlass (58) des Auffangbehälters (7) verbunden ist.

8. Aufbereitungseinheit (1, 51) nach einem der vorhergehenden Ansprüche,
**dadurch gekennzeichnet, dass** ein Auslass (35) der Trenneinheit (21) mit dem Einlass (44) einer Absorbereinheit (63) einer Abscheidevorrichtung (61) für Kohlendioxid verbunden ist.

9. Aufbereitungseinheit (1, 51) nach einem der vorhergehenden Ansprüche, wobei dem Auffangbehälter (7) eine Dosiervorrichtung (45) zur Einstellung einer Alkalikonzentration, insbesondere einer Kaliumkonzentration, im Waschmedium angeschlossen ist.

10. Aufbereitungseinheit (1, 51) nach einem der Ansprüche 4 bis 9,
**dadurch gekennzeichnet, dass** der zweite Klassierbereich (15) über einen Auslass (24) des Auffanggefäßes (7) mit einer Verwertungseinrichtung (29) für das ausgefällte Sulfat, insbesondere für Kaliumsulfat, verbunden ist.

11. Aufbereitungseinheit (1, 51) nach einem der vorhergehenden Ansprüche,
**dadurch gekennzeichnet, dass** als Aktivkomponente des Waschmediums ein Aminosäuresalz, insbesondere ein kaliumhaltiges Aminosäuresalz, eingesetzt ist.

12. Abscheidevorrichtung (61) für Kohlendioxid, umfassend eine Absorbereinheit (63) zur Abtrennung von Kohlendioxid aus einem Rauchgas mittels eines Waschmediums, sowie eine der Absorbereinheit (63) strömungstechnisch nachgeschaltete Desorbereinheit(65) zur Abtrennung des Kohlendioxids aus dem Waschmedium,
**dadurch gekennzeichnet, dass** der Desorbereinheit(65) eine Aufbereitungseinheit (1, 51) nach einem der Ansprüche 1 bis 11 strömungstechnisch nachgeschaltet ist.

13. Verfahren zur Aufbereitung eines mit Schwefeloxiden und/oder Stickoxiden verunreinigten Waschmediums, wobei das Waschmedium zur Aufkonzentrierung seiner Aktivkomponente einer Verdampfungsstufe (2, 52) mit einem Verdampfer (3) und/oder mit einem Wärmetauscher (53), sowie mit einem strömungstechnisch mit dem Verdampfer (3) und/oder dem Wärmetauscher (53) verbundenen Auffangbehälter (7) zugeführt wird, **dadurch gekennzeichnet, dass** in dem Auffangbehälter (7) im Waschmedium enthaltene Schwefeloxide als Sulfatpartikel, insbesondere als Kaliumsulfatpartikel, auskristallisiert werden, die aus dem Auffangbehälter (7) einer Trenneinheit (21) zugeführt werden, und wobei
ein erster Teilstrom (33) eines Oberlaufs (34) der Trenneinheit (21) zur Rückgewinnung der Aktivkomponente des Waschmediums einem zusätzlichen Kristallisator (37) zugeführt wird.

14. Verfahren nach Anspruch 13,
**dadurch gekennzeichnet, dass** die Sulfatpartikel in einer Klassiereinrichtung (13) des Auffangbehälters (7) nach ihrer Partikelgröße getrennt werden, und dass insbesondere ein erster Teilstrom (17) mit im Wesentlichen kleinen und mittleren Sulfatpartikeln, insbesondere mit im Wesentlichen kleinen und mittleren Kaliumsulfatpartikeln, aus dem Auffangbehälter (7) der Trenneinheit zugeführt wird.

15. Verfahren nach Anspruch 13 oder 14,
**dadurch gekennzeichnet, dass** von der Verdampferstufe (2, 52) ein Wärmetauscher (53) umfasst ist, wobei ein zweiter Teilstrom (55) aus dem Auffangbehälter (7) dem Wärmetauscher (53) zugeführt wird.

16. Verfahren nach Anspruch 15,
**dadurch gekennzeichnet, dass** der zweite Teilstrom (55) nach Passieren des Wärmetauschers (53) in den Auffangbehälter (7) zurückgeführt wird.

17. Verfahren nach einem der Ansprüche 14 bis 16,
**dadurch gekennzeichnet, dass** ein zweiter Teilstrom (39) eines Oberlaufs (34) der Trenneinheit (21) dem Verdampfer (3) zugeführt wird.

18. Verfahren nach einem der Ansprüche 14 bis 16,
**dadurch gekennzeichnet, dass** ein zweiter Teilstrom (39) eines Oberlaufs (34) der Trenneinheit (21) dem Auffangbehälter (7) zugeführt wird.

19. Verfahren nach einem der Ansprüche 14 bis 18,
**dadurch gekennzeichnet, dass** ein dritter Teilstrom (41) eines Oberlaufs (34) der Trenneinheit (21) einer Absorbereinheit (63) einer Abscheidevorrichtung (61) zugeführt wird.

20. Verfahren nach einem der Ansprüche 13 bis 19,
**dadurch gekennzeichnet, dass** eine Alkalikonzentration, insbesondere eine Kaliumkonzentration im Waschmedium über eine dem Auffangbehälter (7) angeschlossene Dosiervorrichtung (45) eingestellt wird.

21. Verfahren nach einem der Ansprüche 13 bis 19,
**dadurch gekennzeichnet, dass** ein mit Sulfatpartikeln angereicherter zweiter Teilstrom (25) mit im Wesentlichen großen Sulfatpartikeln aus dem Auffangbehälter (7) einer Verwertungseinrichtung (29) zugeführt wird.

22. Verfahren nach einem der Ansprüche 13 bis 21,
**dadurch gekennzeichnet, dass** als Aktivkomponente des Waschmediums ein Aminosäuresalz, insbesondere ein kaliumhaltiges Aminosäuresalz, eingesetzt wird.

## Claims

1. Processing unit 1, (51) for a liquid scrubbing medium contaminated with sulphur oxides and/or nitrogen oxides, comprising an evaporation stage (2, 52) for concentrating the active component of the scrubbing medium having an evaporator (3) and/or having a heat exchanger (53), having a collecting tank (7) that is connected to the evaporator (3) and/or to the heat exchanger (53), wherein the collecting tank (7) is connected via an outlet (22) to a separation unit (21), **characterized in that** the collecting tank (7) is constructed as a crystallizer (9) for removing sulphur oxides from the scrubbing medium by crystallization of a sulphate, in particular potassium sulphate, and **in that** an outlet (35) of the separation unit (21) is connected to an additional crystallizer (37) for recovery of the active component of the scrubbing medium.

2. Processing unit (1, 51) according to Claim 1,
**characterized in that** the separation unit (21) is constructed as a hydro cyclone.

3. Processing unit (1, 51) according to Claim 1 or 2, **characterized in that** the collecting tank (7) comprises a classifying appliance (13) for separating the crystallized sulphate particles according to the particle size thereof.

4. Processing unit (1, 51) according to Claim 3, **characterized in that** the classifying appliance (13) is constructed in the form of a classifying zone (14) having a first classifying region (15) and a second classifying region (16) within the crystallizer (9), wherein the first classifying region (14) is connected via a first outlet (22) of the collecting tank (7) to an inlet (23) of the separation unit (21).

5. Processing unit (1, 51) according to any one of the preceding claims,
**characterized in that** an outlet (35) of the separation unit (21) is connected to an inlet (38) of the evaporator (3).

6. Processing unit (1, 51) according to any one of the preceding claims,
**characterized in that** the collecting tank (7) is connected via an outlet (54) to an inlet (57) of the collecting tank (7).

7. Processing unit (1, 51) according to any one of preceding claims,
**characterized in that** an outlet (35) of the separation unit (21) is connected to an inlet (58) of the collecting tank (7).

8. Processing unit (1, 51) according to any one of preceding claims,
**characterized in that** an outlet (35) of the separation unit (21) is connected to an inlet (44) of an absorber unit (63) of a carbon dioxide separation device (61).

9. Processing unit (1, 51) according to any one of the preceding claims, wherein a metering device (45) for adjusting an alkali metal concentration, in particular a potassium concentration, in the scrubbing medium is connected to the collecting tank (7).

10. Processing unit (1, 51) according to any one of Claims 4 to 9,
**characterized in that** the second classifying region (15) is connected via an outlet (24) of the collecting tank (7) to a reclamation appliance (29) for the precipitated sulphate, in particular for potassium sulphate.

11. Processing unit (1, 51) according to any one of the preceding claims,
**characterized in that** an amino acid salt, in particular a potassium-containing amino acid salt, is used as active component of the scrubbing medium.

12. Carbon dioxide separation device (61), comprising an absorber unit (63) for separating off carbon dioxide from a flue gas by means of a scrubbing medium, and also a desorber unit (65) that is flow-connected downstream of the absorber unit (63) and is for separating off the carbon dioxide from the scrubbing medium,
**characterized in that** a processing unit (1, 51) according to any one of Claims 1 to 11 is flow-connected downstream of the desorber unit (65) according to any one of Claims 1 to 11.

13. Method for processing a scrubbing medium contaminated with sulphur oxides and/or nitrogen oxides, wherein the scrubbing medium, to concentrate an active component thereof, is fed to an evaporation stage (2, 52) having an evaporator (3) and/or having a heat exchanger (53), and also having a collecting tank (7) that is flow-connected to the evaporator (3) and/or to the heat exchanger (53), **characterized in that** sulphur oxides present in the scrubbing medium are crystallized out in the collecting tank (7) as sulfate particles, in particular as potassium sulphate particles, that are fed to a separation unit (21) from the collecting tank (7), and wherein
a first substream (33) of an overflow (34) of the separation unit (21) is fed to an additional crystallizer (37) for recovery of the active component of the scrubbing medium.

14. Method according to Claim 13,
**characterized in that** the sulphate particles are separated in a classifying appliance (13) of the collecting tank (7) according to their particle size, and **in that**, in particular a first substream (17) having substantially small and medium sulphate particles, in particular having substantially small and medium potassium sulphate particles, is fed from the collecting tank (7) to the separation unit.

15. Method according to Claim 13 or 14, **characterized in that** a heat exchanger (53) is comprised by the evaporator stage (2, 52), wherein a second sub stream (55) is fed from the collecting tank (7) to the heat exchanger (53).

16. Method according to Claim 15,
**characterized in that** the second sub stream (55), after it passes through the heat exchanger (53), is recirculated to the collecting tank (7).

17. Method according to any one of Claims 14 to 16, **characterized in that** a second sub stream (39) of an overflow (34) of the separation unit (21) is fed to the evaporator (3).

18. Method according to any one of Claims 14 to 16, **characterized in that** a second sub stream (39) of an overflow (34) of the separation unit (21) is fed to the collecting tank (7).

19. Method according to any one of Claims 14 to 18, **characterized in that** a third sub stream (41) of an overflow (34) of the separation unit (21) is fed to an absorber unit (63) of a separation device (61).

20. Method according to any one of Claims 13 to 19, **characterized in that** an alkali metal concentration, in particular a potassium concentration, in the scrubbing medium is adjusted via a metering device (45) connected to the collecting tank (7).

21. Method according to any one of Claims 13 to 19, **characterized in that** a second sub stream (25) that is enriched with sulphate particles having substantially large sulphate particles is fed from the collecting tank (7) to a reclamation appliance (29).

22. Method according to any one of Claims 13 to 21, **characterized in that** an amino acid salt, in particular a potassium-containing amino acid salt, is used as active component of the scrubbing medium.

## Revendications

1. Unité (1, 51) de traitement d'un fluide de lavage liquide pollué par des oxydes de souffre et/ou des oxydes d'azote, comprenant un étage (2, 52) d'évaporation pour concentrer les constituants actifs du fluide de lavage, ayant un évaporateur (3) et/ou un échangeur de chaleur (53), comprenant un récipient (7) de recueil raccordé à l'évaporateur (3) et/ou à l'échangeur de chaleur (53), le récipient (7) de recueil communiquant avec une unité (21) de séparation par une sortie (22), **caractérisée en ce que** le récipient (7) de recueil est constitué sous la forme d'un cristallisoir (9) pour éliminer des oxydes d'azote du fluide de lavage par cristallisation d'un sulfate, notamment de sulfate de potassium, et **en ce qu'**une sortie (35) de l'unité (21) de séparation communique avec un cristallisoir (37) supplémentaire de récupération des constituants actifs du fluide de lavage.

2. Unité (1, 51) de traitement suivant la revendication 1, **caractérisée en ce que** l'unité (21) de séparation est constituée sous la forme d'un hydrocyclone.

3. Unité (1, 51) de traitement suivant la revendication 1 ou 2,
**caractérisée en ce que** le récipient (7) de recueil comprend un dispositif (13) de tri pour séparer les particules de sulfate cristallisées en fonction de leur dimension de particule.

4. Unité (1, 51) de traitement suivant la revendication 3, **caractérisée en ce que** le dispositif (13) de tri est constitué dans le cristallisoir (9) sous la forme d'une zone (14) de tri ayant une première région (15) de tri et une deuxième région (16) de tri, la première région (14) de tri communiquant avec une entrée (23) de l'unité (21) de séparation par une première sortie (22) du récipient (7) de recueil.

5. Unité (1, 51) de traitement suivant l'une des revendications précédentes,
**caractérisée en ce qu'**une sortie (35) de l'unité (21) de séparation communique avec une entrée (38) de l'évaporateur (3).

6. Unité (1, 51) de traitement suivant l'une des revendications précédentes,
**caractérisée en ce que** le récipient (7) de recueil communique, par une sortie (54), avec une entrée (57) du récipient (7) de recueil.

7. Unité (1, 51) de traitement suivant l'une des revendications précédentes,
**caractérisée en ce qu'**une sortie (35) de l'unité (21) de séparation communique avec une entrée (58) du récipient (7) de recueil.

8. Unité (1, 51) de traitement suivant l'une des revendications précédentes,
**caractérisée en ce qu'**une sortie (35) de l'unité (21) de séparation communique avec l'entrée (44) d'une unité (63) d'absorption d'une installation (61) de séparation du dioxyde de carbone.

9. Unité (1, 51) de traitement suivant l'une des revendications précédentes,
dans laquelle il est raccordé au récipient (7) de recueil un système (45) de dosage pour régler la concentration en alcalin, notamment une concentration de potassium, dans le fluide de lavage.

10. Unité (1, 51) de traitement suivant l'une des revendications 4 à 9,
**caractérisée en ce que** la deuxième région (15) de tri communique, par une sortie (24) du récipient (7) de recueil, avec un dispositif (29) de valorisation du sulfate précipité, notamment du sulfate de potassium.

11. Unité (1, 51) de traitement suivant l'une des revendications précédentes,
**caractérisée en ce que** sont utilisés, comme constituants actifs du fluide de lavage, un sel d'acide aminé, notamment un sel d'acide aminé contenant du potassium.

12. Installation (61) de séparation du dioxyde de carbone, comprenant une unité (63) d'absorption pour séparer du dioxyde de carbone d'un gaz de fumée au moyen d'un fluide de lavage, ainsi qu'une unité (65) de désorption montée en aval en technique d'écoulement de l'unité (63) d'absorption pour
séparer le dioxyde de carbone du fluide de lavage, **caractérisée en ce qu'**en aval en technique d'écoulement de l'unité (65) de désorption est montée une unité (1, 51) de traitement suivant l'une des revendications 1 à 11.

13. Procédé de traitement d'un fluide de lavage pollué par des oxydes de souffre et/ou des oxydes d'azote, dans lequel on envoie le fluide de lavage, pour la concentration de ses constituants actifs, à un étage (2, 52) d'évaporation, comprenant un évaporateur (3) et/ou un échangeur de chaleur (53), ainsi qu'un récipient (7) de recueil, communiquant en technique d'écoulement avec l'évaporateur (3) et/ou l'échangeur de chaleur (53),
**caractérisé en ce que**, dans le récipient (7) de recueil, on sépare des oxydes de souffre contenus dans le fluide de lavage par cristallisation sous la forme de particules de sulfate, notamment de particules de sulfate de potassium, que l'on envoie du récipient (7) de recueil à une unité (21) de séparation et dans lequel
on envoie, à une cristallisoir (37) supplémentaire, un premier courant (33) partiel d'un trop-plein (34) de l'unité (21) de séparation pour récupérer les constituants actifs du fluide de lavage.

14. Procédé suivant la revendication 13,
**caractérisé en ce que** l'on sépare les particules de sulfate dans un dispositif (13) de tri du récipient (7) de recueil, suivant leur dimension de particule et **en ce que** notamment on envoie, du récipient (7) de recueil à l'unité de séparation, un premier courant (17) partiel ayant des particules de sulfate essentiellement petites et moyennes, en ayant notamment des particules de sulfate de potassium essentiellement petites et moyennes.

15. Procédé suivant la revendication 13 ou 14,
**caractérisé en ce qu'**un échangeur de chaleur (53) est entouré de l'étage (2, 52) d'évaporateur, un deuxième courant (55) partiel étant envoyé du récipient (7) de recueil à l'échangeur de chaleur (53).

16. Procédé suivant la revendication 15,
dans lequel on retourne le deuxième courant (55) partiel au récipient (7) de recueil après qu'il a passé dans l'échangeur de chaleur (53).

17. Procédé suivant l'une des revendications 14 à 16,
**caractérisé en ce que** l'on envoie à l'évaporateur (3) un deuxième courant (39) partiel d'un trop plein (34) de l'unité (21) de séparation.

18. Procédé suivant l'une des revendications 14 à 16,
**caractérisé en ce que** l'on envoie au récipient (7) de recueil un deuxième courant (39) partiel d'un trop-plein (34) de l'unité (21) de séparation.

19. Procédé suivant l'une des revendications 14 à 18,
**caractérisé en ce que** l'on envoie, à une unité (63) d'absorption d'une installation (61) de séparation, un troisième courant (41) partiel d'un trop-plein (34) de l'unité (21) de séparation.

20. Procédé suivant l'une des revendications 13 à 19,
**caractérisé en ce que** l'on règle une concentration d'alcalin, notamment une concentration de potassium, dans le fluide de lavage par un dispositif (45) d'addition dosée raccordé au récipient (7) de recueil.

21. Procédé suivant l'une des revendications 13 à 19,
**caractérisé en ce que** l'on envoie, du récipient (7) de recueil à un dispositif (29) de valorisation, un deuxième courant (25) partiel enrichi en particules de sulfate et ayant des particules de sulfate essentiellement grandes.

22. Procédé suivant l'une des revendications 13 à 21,
**caractérisé en ce que** l'on utilise, comme constituants actifs du fluide de lavage, un sel d'acide aminé, notamment un sel d'acide aminé contenant du potassium.
